Europäisches Patentamt

European Patent Office

Office européen des brevets

(11) Veröffentlichungsnummer : **0 091 399**
**B1**

(12) **EUROPÄISCHE PATENTSCHRIFT**

(45) Veröffentlichungstag der Patentschrift :
28.05.86

(51) Int. Cl.⁴ : **C 25 C   3/20**, G 01 J   5/04

(21) Anmeldenummer : 83810103.8

(22) Anmeldetag : 14.03.83

(54) Vorrichtung zum Messen der Badtemperatur in einer Aluminium-Schmelzflusselektrolysezelle.

(30) Priorität : 02.04.82 CH 2037/82

(43) Veröffentlichungstag der Anmeldung :
12.10.83 Patentblatt 83/41

(45) Bekanntmachung des Hinweises auf die Patenterteilung : 28.05.86 Patentblatt 86/22

(84) Benannte Vertragsstaaten :
CH DE LI

(56) Entgegenhaltungen :
FR-A- 1 389 170
FR-A- 2 104 781
GB-A- 1 147 814
MESSEN UND PRÜFEN/AUROMATIK, Nr. 12, Dezember 1978, Seiten 849, 850, 859 A.J. INTRIERI:
"Strahlungsthermometer mit Glasfaserbündel erschliesst neue Anwendungsbereiche"

(73) Patentinhaber : SCHWEIZERISCHE ALUMINIUM AG

CH-3965 Chippis (CH)

(72) Erfinder : Roggen, Rolf
Schlossgasse 29
CH-1950 Sion (CH)

Jouve, 18, rue St-Denis, 75001 Paris, France

## Beschreibung

Die vorliegende Erfindung bezieht sich auf eine Vorrichtung zum Messen der Badtemperatur in einer Schmelzflusselektrolysezelle zur Herstellung von Aluminium, insbesondere mit Kohlenstoffanoden.

Für die Gewinnung von Aluminium durch Schmelzflusselektrolyse von Aluminiumoxid wird dieses in einer Fluoridschmelze gelöst, die zum grössten Teil aus Kryolith besteht. Das kathodisch abgeschiedene Aluminium sammelt sich unter der Fluoridschmelze auf dem Kohleboden der Zelle, wobei die Oberfläche des flüssigen Aluminiums die Kathode bildet. In die Schmelze tauchen von oben Anoden ein, die bei konventionellen Verfahren aus amorphem Kohlenstoff bestehen. An den Kohleanoden entsteht durch die elektrolytische Zersetzung des Aluminiumoxids Sauerstoff, der sich mit dem Kohlenstoff der Anoden zu $CO_2$ und $CO$ verbindet. Die Elektrolyse findet in einem Temperaturbereich von etwa 940-970 °C statt.

Im Laufe der Elektrolyse verarmt der Elektrolyt an Aluminiumoxid. Bei einer unteren Konzentration von 1 bis 2 Gew.-% Aluminiumoxid im Elektrolyten kommt es zum Anodeneffekt, der sich in einer Erhöhung der Spannung von beispielsweise 4 bis 5 V auf 30 V und darüber auswirkt. Spätestens dann muss die Aluminiumoxidkonzentration durch Zugabe von neuer Tonerde angehoben werden.

Die heute weitgehend eingesetzten Mittel zur Prozesssteuerung mittels EDV verlangen, dass die Badtemperatur dauernd gemessen wird. Abweichungen müssen sofort erfasst werden. Zu diesem Zweck werden direkte Messverfahren, beispielsweise mittels eines in das Bad eingetauchten Thermoelements, oder indirekte Messverfahren, beispielsweise mittels eines in Entfernung montierten Infrarotpyrometers, eingesetzt.

In der DE-PS 28 44 417 sind zwei verschweisste Thermodrähte, die gegen den Angriff durch den schmelzflüssigen Elektrolyten geschützt sind, offenbart. Diese Thermodrähte sind — eingebettet in einen elektrisch isolierenden Füllstoff — von einem einseitig geschlossenen Schutzrohr umgeben, welches mehrschichtig aus Metallen und Isolierstoffen aufgebaut ist. Das Schutzrohr ist von einem dickwandigen Graphittiegel umhüllt. Im oberen Bereich ist dieser Graphittiegel von einem Stahlrohr geschützt, das seinerseits grösstenteils mit einer Kruste aus erstarrtem Elektrolytmaterial überzogen ist.

Obwohl diese Ausführungsform in bezug auf mechanische Eigenschaften und das Korrosionsverhalten angesichts der hohen chemischen Aggressivität der Schmelze die Anforderungen der Aluminiumproduzenten durchaus zu erfüllen vermocht hat, weist es einige Nachteile auf :

Ueber das Schutzrohr wird eine beträchtliche Wärmemenge nach oben, in den verhältnismässig kühlen Bereich oberhalb des Badniveaus, geleitet und geht teilweise durch Abstrahlung und/oder Abfluss verloren. Deshalb wird eine zu niedrige Badtemperatur gemessen.

Die grosse Wärmekapazität des dicken Schutzmantels aus Graphit führt zu zeitlichen Verzögerungen der Anzeige von Temperaturschwankungen im Bad um ca. eine halbe Stunde.

Das Thermoelement beansprucht verhältnismässig viel Platz, dessen Anordnung kommt deshalb nur neben der Anode in Betracht, z. B. im Mittelspalt in der Zellenlängsachse. Damit kann nicht die Temperatur unterhalb der Anode gemessen werden. Dies führt wiederum zu zu niedrigen Temperaturmessungen, die zudem zeitlich noch etwas verzögert sind.

Wegen der Verkrustung des Thermoelements können beim Anodenwechsel Defekte auftreten.

Das Thermoelement nach der DE-PS 28 44 417 ist verhältnismässig teuer.

Die Anmelderin hat nach einem offenkundigen Verfahren eine ungefähr vertikale Bohrung in einem vorgebrannten Anodenkörper aus Kohlenstoff ausgespart und in der Achse der Verlängerung dieser Bohrung oberhalb der Elektrolysezelle ein Infrarotpyrometer montiert. Um das Ansteigen und Erstarren des schmelzflüssigen Elektrolyten in der Bohrung zu verhindern, ist von oben dauernd Pressluft in die Bohrung eingeblasen worden. Der ungünstige Standort der verhältnismässig teuren Infrarotpyrometer im anodischen Bereich der Elektrolysezelle und das dauernd notwendige Einblasen von Pressluft sowie die Erfahrung, dass in der Praxis krusten- bzw. kohleschaumfreie Oberflächen nicht zu erreichen sind, haben bewirkt, dass sich diese Art der Temperaturüberwachung in industriellem Rahmen nicht bewährt hat.

Der Erfinder hat sich deshalb die Aufgabe gestellt, eine wirtschaftlich herzustellende und arbeitende Vorrichtung zum Messen der Badtemperatur in einer Schmelzflusselektrolysezelle zur Herstellung von Aluminium, insbesondere mit Kohlenstoffanoden, zu schaffen, welche eine kontinuierliche Messung der Badtemperatur ermöglicht und Temperaturschwankungen sofort erfasst.

Die Aufgabe wird erfindungsgemäss nach dem Kennzeichen von Patentanspruch 1 gelöst.

Die Vorrichtung zum Messen der Badtemperatur wird an mindestens einer Anode pro Elektrolysezelle angebracht. In einer Zelle mit beispielsweise 24 vorgebrannten Anodenkörpern werden vorzugsweise 1-4 Anoden mit solchen Vorrichtungen bestückt.

Die ungefähr vertikal verlaufende Aussparung im Anodenkörper wird entweder in der grünen Anode mit einer Attrappe vorgeformt, oder in der kalzinierten Anode wird ein entsprechendes Loch ausgebohrt.

Der vorzugsweise runde, optisch leitende Stab hat zweckmässig einen Durchmesser von 5-15 mm, seine äusseren Abmessungen entsprechen jedoch der lichten Weite der Bohrung im Anodenkörper. Vorzugsweise ist der optisch leitende Stab als Vollkörper ausgebildet ; er versieht jedoch seinen Dienst auch als Rohr mit verhältnismässig dicker Wandung.

Der optisch leitende Stab wird derart montiert, dass eine Bodenfläche bündig mit der Bodenfläche der Anoden ist. Damit tritt er auf gleichem Niveau wie die Arbeitsfläche der Anode in Kontakt mit dem schmelzflüssigen Elektrolyten. Das Material des optisch leitenden Stabes ist so gewählt, dass es nicht nur infrarot-durchlässig ist, sondern sich auch in ungefähr dem Anodenabbrand entsprechendem Masse im schmelzflüssigen Elektrolyten auflöst. Für das hergestellte Aluminium ist dabei von wesentlicher Bedeutung, dass im optisch leitenden Stab keine Komponenten enthalten sind, die das Hüttenaluminium in unzulässiger Weise verunreinigen. Der Stab besteht deshalb aus $SiO_2$ oder vorzugsweise infrarot-durchlässigem Korund.

Im Lichtstecker muss der optische Uebergang vom Stab in die Ankoppelungsflüssigkeit bzw. direkt in die Glasfasern möglichst reflexionsfrei erfolgen. Nach dem Gesetz

$$R = \left( \frac{n_1 - n_2}{n_1 + n_2} \right)^2$$

für die Reflexion R ist anzustreben, dass die Ankoppelungsflüssigkeit einen möglichst hohen Brechungsindex $n_2$ oder, präziser ausgedrückt, möglichst den gleichen Brechungsindex $n_1$ wie das optisch leitende Material des Stabes bzw. die Fasern hat. In diesem Fall wird R ungefähr gleich Null.

Die von einer Ummantelung geschützten Fasernbündel werden auf dem Anodenspaten befestigt oder vorzugsweise in einem entsprechend ausgeformten Kanal verlegt.

Der im oberen Bereich der Anodenstange montierte Infrarotdetektor wandelt die optischen in elektrische Signale um, welche an das computergesteuerte Prozessüberwachungssystem übermittelt werden. Ein drahtloser Sender ist wohl etwas aufwendiger, hat jedoch gegenüber einem Verbindungskabel den Vorteil, dass er bei einem Anodenwechsel weniger hinderlich ist.

Nach einer bevorzugten Ausführungsform wird die Bohrung im Anodenkörper etwas grösser als dem Stabdurchmesser entsprechend ausgespart und mit einem Schutzrohr ausgekleidet. Dadurch wird vermieden, dass der optisch leitende Stab in direkten Kontakt mit dem Kohlenstoff des Anodenkörpers tritt, und bei Elektrolysetemperatur eine Reaktion, beispeilsweise von C mit $SiO_2$, ausgelöst wird. Als Material für das Schutzrohr, das nach oben aus der Anode herausragen kann, ist insbesondere gesintertes Aluminiumoxid geeignet. Dieses löst sich im schmelzflüssigen Elektrolyten in ungefähr gleichem Masse wie die Anode abbrennt ; ausserdem wird das abgeschiedene Aluminium in keiner Weise verunreinigt.

Die Wandstärke des Schutzrohres ist an sich nicht von wesentlicher Bedeutung, sie liegt jedoch zweckmässig zwischen 1 und 5 mm.

Im Betrieb taucht das untere Ende des optisch leitenden Stabes mit der Bodenfläche des Anodenkörpers in den schmelzflüssigen Elektrolyten ein. Dieses untere Ende wird in gleichem Masse aufgelöst wie der Anodentisch abbrennt, d. h. ungefähr 15 mm/Tag. Die Eigenstrahlung der Bodenfläche des Stabes bzw. des mit ihr in Kontakt stehenden schmelzflüssigen Elektrolyten wird ohne nennenswerte Verluste über den Lichtstecker zum Infrarotdetektor geleitet. Damit kann ohne jegliche weitere Hilfsgeräte die Badtemperatur immer an derselben Stelle gemessen werden, nämlich am Ort des Entstehens der Prozesswärme.

Die Vorteile der Erfindung lassen sich wie folgt zusammenfassen :

Die Temperatur wird unter der Anode gemessen, an der Stelle von elektrischer und chemischer Wärmeentwicklung. Alle Aenderungen der Prozessparameter, die auf die Aenderung der Badtemperatur einen Einfluss haben (z. B. Ofenstrom, Veränderungen im Bad, Traversenposition usw.), werden sofort erfasst.

Der optisch leitende Stab wird bei jedem Anodenwechsel erneuert. Dies kann ohne besondere Massnahmen ausserhalb des Bereichs der Elektrolysezelle erfolgen.

Die Vorrichtung ist unempfindlich gegen mechanische Einwirkungen während des Elektrolysebetriebes, wie z. B. dem Krustenbrechen oder dem Anodenwechsel.

Bei Elektrolysezellen mit Einzelanodenaufhängung kann jede Anode mit einer erfindungsgemässen Vorrichtung versehen und individuell bedient werden.

Die Kosten der sich verbrauchenden optisch leitenden Stäbe sind gering, sie bleiben unter sFr. 50.- pro Messstelle und Monat.

Die Erfindung wird anhand der in der Zeichnung dargestellten Ausführungsbeispiele näher erläutert. Es zeigen schematisch :

Figur 1    eine perspektivische Darstellung einer Anode mit der erfindungsgemässen Vorrichtung,

Figur 2    einen Vertikalschnitt durch einen Anodenkörper mit von einem Schutzrohr umgebenen optisch leitendem Stab,

Figur 3    einen Vertikalschnitt durch einen Lichtstecker.

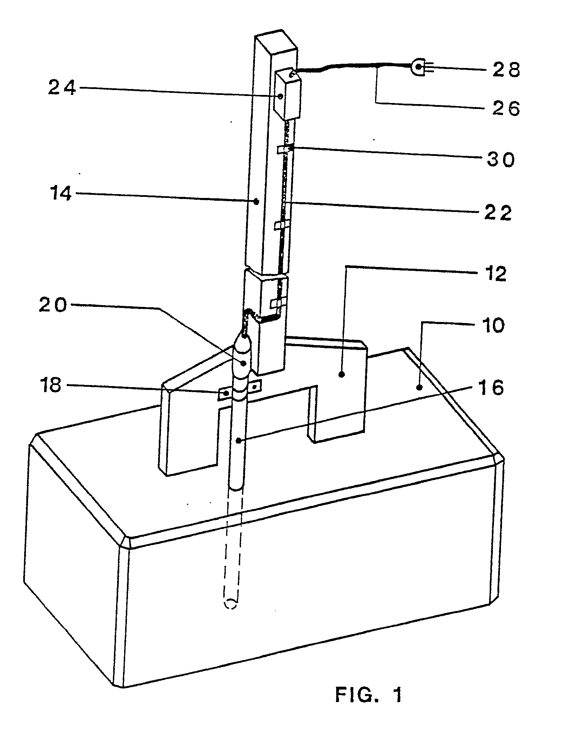

Die in Fig. 1 dargestellte Anode für eine Schmelzflusselektrolysezelle zur Herstellung von Aluminium besteht aus einem vorgebrannten Anodenkörper 10, welcher über Spaten 12 an einer Anodenstange 14 aufgehängt ist. Ein Stab 16 aus einem infrarot-durchlässigen Material durchgreift den Anodenkörper 10 in vertikaler Richtung und ist bündig mit der Anodenunterseite. Der Stab 16 ist mit einer Bride 18 am Spaten 12, nahe der Anodenstange 14, befestigt. Ueber den Stab 16 ist ein Lichtstecker 20 gestülpt. Mindestens ein Fasernbündel 22 führt vom Lichtstecker 20 zum Infrarotdetektor 24. In diesem Infrarotdetektor 24 werden die optischen in elektrische Signale umgewandelt und über ein Verbindungskabel 26 und einen Stecker 28 zum Regelsystem des Elektrolyseprozesses übermittelt. Vor dem Anodenwechsel muss der Stecker 28 ausgezogen werden ; vorteilhaft ist er deshalb derart ausgestaltet, dass der elektrische Kontakt beim Anodenwechsel automatisch unterbrochen wird.

Das bzw. die ummantelten Fasernbündel 22 können statt mit Briden 30 befestigt in einer (nicht dargestellten) Aussparung in der Anodenstange 14 angebracht sein.

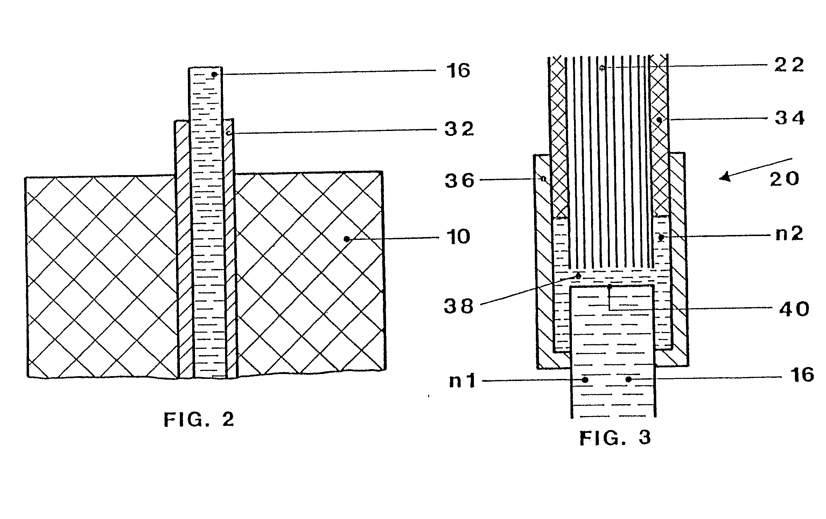

In der Ausführungsform nach Fig. 2 ist der den Anodenkörper 10 durchgreifende Stab 16 aus optisch leitendem Material von einem Schutzrohr 32 umhüllt. Dieses Schutzrohr 32 besteht aus gesintertem Aluminiumoxid. Es ragt einige Zentimeter über die Deckfläche des Anodenkörpers hinaus.

Der in Fig. 3 dargestellte Lichtstecker 20 stellt die optische Verbindung zwischen dem Stab 16 und den mit einer Ummantelung 34 versehenen Fasernbündeln 22 her. Ein Gehäuse 36 ist mit einer Ankoppelungsflüssigkeit 38 gefüllt. Deren hoher Brechungsindex $n_2$, der möglichst vergleichbar mit dem Brechungsindex $n_1$ des Stabes 16 ist, verhindert, dass an der Deckfläche 40 des Stabes 16 in nennenswertem Umfang Reflexionen auftreten.

### Patentansprüche

1. Vorrichtung zum Messen der Badtemperatur in einer Schmelzflusselektrolysezelle zur Herstellung von Aluminium, insbesondere mit Kohlenstoffanoden, gekennzeichnet durch

einen den Anodenkörper (10) in ungefähr vertikaler Richtung durchgreifenden Stab (16) aus einem infrarot-durchlässigen Material, welches sich dem Anodenabbrand entsprechend im schmelzflüssigen Elektrolyten auflöst, aber das abgeschiedene Aluminium nicht verunreinigt,

einen über den Stab (16) gestülpten Lichtstecker (20), mindestens ein optisch an den Stab (16) gekoppeltes, infrarot-durchlässiges Fasernbündel (22), welches in einer Ummantelung (34) zu einem im oberen Zellenbereich angeordneten Infrarotdetektor (24) führt, und

einen die elektrischen Signale zum Regelsystem übermittelnden Sender oder ein Verbindungskabel (26).

2. Vorrichtung nach Anspruch 1, dadurch gekennzeichnet, dass der Stab (16) aus $SiO_2$ oder infrarot-durchlässigem Korund besteht.

3. Vorrichtung nach Anspruch 1 oder 2, dadurch gekennzeichnet, dass der Stab (16) im Querschnitt rund ausgebildet ist.

4. Vorrichtung nach Anspruch 3, dadurch gekennzeichnet, dass der Stab (16) einen Durchmesser von 5-15 mm hat.

5. Vorrichtung nach mindestens einem der Ansprüche 1-4, dadurch gekennzeichnet, dass der Lichtstecker eine infrarot-durchlässige Ankoppelungsflüssigkeit (38) enthält, wobei deren Brechungsindex ($n_2$) ungefähr gleich gross ist wie derjenige ($n_1$) des Stabes (16).

6. Vorrichtung nach mindestens einem der Ansprüche 1-5, dadurch gekennzeichnet, dass der Stab (16) mindestens im Bereich des Anodenkörpers (10) in ein Schutzrohr (32), welches sich im schmelzflüssigen Elektrolyten auflöst und den Elektrolyten nicht verunreinigt, eingebettet ist.

7. Vorrichtung nach Anspruch 6, dadurch gekennzeichnet, dass das Schutzrohr (32) einige Zentimeter über den Anodenkörper (10) hinausragt.

8. Vorrichtung nach Anspruch 6 oder 7, dadurch gekennzeichnet, dass das Schutzrohr (32) aus gesintertem Aluminiumoxid besteht.

9. Vorrichtung nach einem der Ansprüche 1-8, dadurch gekennzeichnet, dass der Stab (16), der Lichtstecker (20) das Fasernbündel (22) und der Infrarotdetektor (24) am Anodenspaten (12) bzw. der Anodenstange (14) einer vorgebrannten Anode (10) befestigt sind.

### Claims

1. A device for measuring the temperature of the bath in a fusion electrolysis cell for the production of aluminium, in particular with carbon anodes, characterized by

a rod (16) of a material penetrable by infrared, which passes through the anode body (10) in an approximately vertical direction and which dissolves in the fused electrolyte at a rate corresponding with the burning away of the anodes, but which does not contaminate the aluminium precipitated ;

a light plug (20) inverted over the rod (16) ;

at least one bundle of fibres (22) penetrable by infrared, which is coupled optically to the rod (16) and which leads in a sheathing (34) to an infrared detector (24) arranged in the upper region of the cell ; and

a transmitter which transmits the electrical signals to the regulating system, or a connecting cable (26).

2. A device as in Claim 1, characterized in that the rod (16) consists of $SiO_2$ or corundum penetrable by infrared.

3. A device as in Claim 1 or 2, characterized in that the rod (16) is made round in cross-section.

4. A device as in Claim 3, characterized in that the rod (16) has a diameter of 5-15 mm.

5. A device as in a least one of the Claims 1-4, characterized in that the light plug contains a coupling liquid (38) penetrable by infrared, the refractive index ($n_2$) of it being approximately equal to that ($n_1$) of the rod (16).

6. A device as in at least one of the Claims 1-5, characterized in that the rod (16) at least in the region of the anode body (10) is embedded in a protective tube (32) which dissolves in the fused electrolyte and does not contaminate the electrolyte.

7. A device as in Claim 6, characterized in that the protective tube (32) projects a few centimetres above the anode body (10).

8. A device as in Claim 6 or 7, characterized in that the protective tube (32) consists of sintered aluminium oxide.

9. A device as in one of the Claims 1-8, characterized in that the rod (16), the light plug (20), the bundle of fibres (22) and the infrared detector (24) are fastened to the anode spade (12) or respectively the anode rod (14) of a prebaked anode (10).

**Revendications**

1. Appareil pour mesurer la température du bain dans une cuve d'électrolyse ignée pour la fabrication d'aluminium, comportant en particulier des anodes en carbone, caractérisé par

une tige (16) qui traverse le corps d'anode (10) à peu près verticalement et est faite d'un matériau laissant passer le rayonnement infrarouge, lequel se dissout dans l'électrolyte en fusion mais ne rend pas impur l'aluminium libéré,

un connecteur de lumière (20) emboîté sur la tige (16),

au moins un faisceau de fibres (22) laissant passer le rayonnement infrarouge, qui est couplé optiquement à la tige (16) et mène dans une gaine (34) à un détecteur à infrarouge (24) installé dans la partie supérieure de la cuve, et

un émetteur ou un câble de liaison (26) transmettant les signaux électriques au système de réglage.

2. Appareil selon la revendication 1, caractérisé en ce que la tige (16) est en $SiO_2$ ou en corindon laissant passer le rayonnement infrarouge.

3. Appareil selon la revendication 1 ou 2, caractérisé en ce que la tige (16) possède une section droite circulaire.

4. Appareil selon la revendication 3, caractérisé en ce que la tige (16) possède un diamètre de 5-15 mm.

5. Appareil selon au moins une des revendications 1-4, caractérisé en ce que le connecteur de lumière contient un liquide de couplage (38) qui laisse passer le rayonnement infrarouge et dont l'indice de réfraction ($n_2$) est à peu près égal à celui ($n_1$) de la tige (16).

6. Appareil selon au moins une des revendications 1-5, caractérisé en ce que la tige (16), au moins dans la région du corps d'anode (10), est logée dans un tube protecteur (32) qui se dissout dans l'électrolyte en fusion et ne le rend pas impur.

7. Appareil selon la revendication 6, caractérisé en ce que le tube protecteur (32) dépasse de quelques centimètres au-dessus du corps d'anode (10).

8. Appareil selon la revendication 6 ou 7, caractérisé en ce que le tube protecteur (32) est en alumine frittée.

9. Appareil selon une des revendications 1-8, caractérisé en ce que la tige (16), le connecteur de lumière (20), le faisceau de fibres (22) et le détecteur à infrarouge (24) sont fixés à l'élément de raccordement en forme de bêche (12) de l'anode ou à la barre porte-anode (14) d'une anode (10) précuite.

FIG. 1

FIG. 2

FIG. 3